# DEMANDE DE BREVET EUROPEEN

(11) **EP 4 707 178 A1**
(43) Date de publication de la demande: **11.03.2026**
(21) Numéro de dépôt: 25197999.3
(22) Date de dépôt: 26.08.2025
(51) Int. Cl.: B64D 27/40, F02C 7/20

(54) **ENSEMBLE DE PROPULSION COMPRENANT UNE ATTACHE-MOTEUR ARRIÈRE AMORTISSANTE, AÉRONEF COMPORTANT AU MOINS UN TEL ENSEMBLE DE PROPULSION**

(30) Priorité: 06.09.2024 FR 2409450
(71) Demandeur: AIRBUS OPERATIONS (S.A.S.), 31060 Toulouse (FR)
(72) Inventeur: JOURNADE, Frédéric, 31060 TOULOUSE (FR); PAUTIS, Olivier, 31060 TOULOUSE (FR); COLMAGRO, Jérôme, 31060 TOULOUSE (FR); GUENEAU, Germain, 31060 TOULOUSE (FR); DE NICOLA, Marc, 31060 TOULOUSE (FR); GRIMAL, Fabrice, 31060 TOULOUSE (FR)
(74) Mandataire: Fantin, Laurent

(57) **Abrégé**

L'invention a pour objet un ensemble de propulsion (30) comprenant :
- un système d'attache-moteur (46), reliant une structure primaire (42) de mât et une motorisation (32), qui comporte plusieurs attaches (48, 50, 52) présentant chacune au moins un point d'ancrage moteur (P48, P50, P52) sur la motorisation (32), tous les points d'ancrage moteur (P48, P50, P52) étant approximativement positionnés dans un même plan transversal (PT),
- une attache-moteur arrière amortissante (66) reliant la structure primaire (42) et la partie arrière (40.3) du cœur de réacteur (40), ladite attache-moteur arrière amortissante (66) formant un chemin d'efforts qui comporte au moins un élément déformable de manière élastique.

Cette configuration permet d'optimiser le transfert des efforts entre la motorisation (32) et la structure primaire (42).

## Description

La présente demande se rapporte à un ensemble de propulsion comprenant une attache-moteur arrière amortissante ainsi qu'à un aéronef comportant au moins un tel ensemble de propulsion.

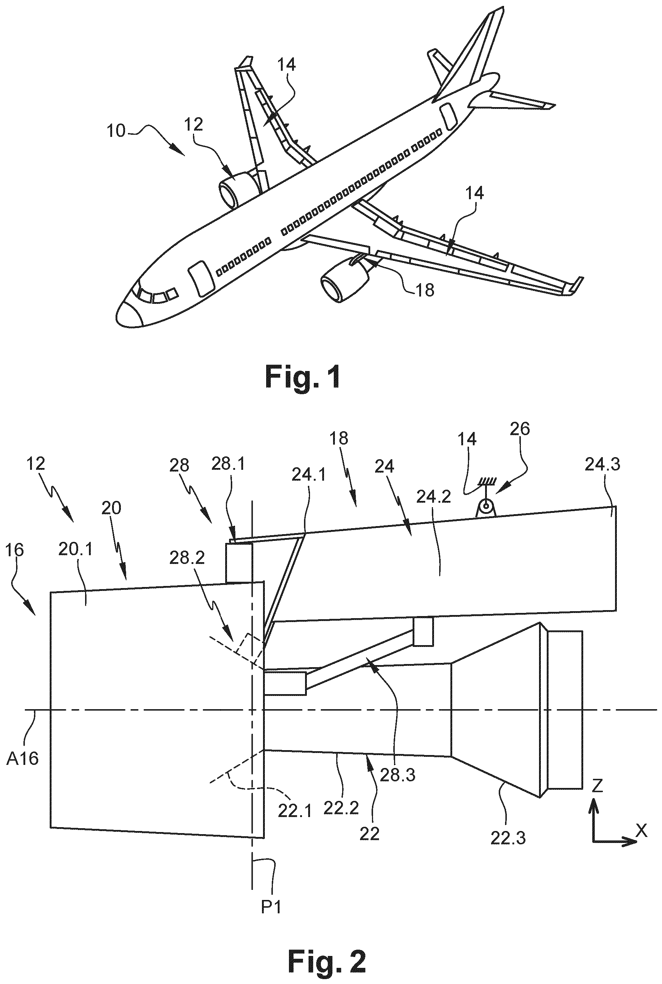

Selon une configuration visible sur les figures 1 et 2, un aéronef 10 comprend plusieurs ensembles de propulsion 12 qui sont positionnés sous la voilure 14 de l'aéronef 10.

Un ensemble de propulsion 12 comprend une motorisation 16, une nacelle (non représentée sur la figure 2) positionnée autour de la motorisation 16 ainsi qu'un mât 18 reliant la motorisation 16 au reste de l'aéronef 10, notamment à la voilure 14.

Pour la suite de la description, une direction longitudinale X est parallèle à l'axe de rotation de la motorisation A16. Un plan transversal est un plan perpendiculaire à l'axe de rotation de la motorisation A16. Un plan médian vertical est un plan vertical passant par l'axe A16 de la motorisation. Une direction transversale et horizontale Y est une direction perpendiculaire à l'axe de rotation de la motorisation A16 et horizontale. Une direction transversale et verticale Z est une direction perpendiculaire à l'axe de rotation de la motorisation A16 et verticale. Un plan médian vertical est un plan vertical contenant l'axe de rotation de la motorisation A16. Les termes avant et arrière font référence au sens d'écoulement du flux d'air dans la motorisation 16, ce dernier s'écoulant de l'avant vers l'arrière.

La motorisation 16 comprend une soufflante 20 qui comporte un carter de soufflante 20.1 ainsi qu'un cœur de réacteur 22 qui comporte une partie avant 22.1 positionnée à l'intérieur de la soufflante 20, une partie centrale 22.2 ainsi qu'une partie arrière 22.3.

Le mât 18 comprend une structure primaire 24, sous la forme d'un caisson, qui est reliée à la voilure 14 par un système d'attache-voilure 26 (représenté de manière simplifiée sur la figure 2 car hors champ de l'invention) et à la motorisation 16 par un système d'attache-moteur 28. Cette structure primaire 24 comprend une extrémité avant 24.1, une partie médiane 24.2 et une extrémité arrière 24.3.

Selon un mode de réalisation visible sur la figure 2, le système d'attache moteur 28 comprend une première attache 28.1 reliant l'extrémité avant 24.1 de la structure primaire 24 et le carter de soufflante 20.1, une deuxième attache 28.2 reliant l'extrémité avant 24.1 de la structure primaire 24 et la partie avant 22.1 du cœur de réacteur 22 ainsi qu'une troisième attache 28.3 comportant deux bielles, positionnées de manière symétrique par rapport au plan médian vertical de la motorisation 16, reliant la partie médiane 24.2 de la structure primaire 24 et la partie avant 22.1 du cœur de réacteur 22. Selon ce mode de réalisation, les première, deuxième et troisième attaches 28.1, 28.2, 28.3 sont reliées au cœur de réacteur 22 en des points positionnés approximativement dans un même plan transversal P1.

Dans certains cas, cette solution ne permet pas un transfert optimal des efforts entre la motorisation 16 et la structure primaire 24 du mât 18.

La présente invention vise à remédier à tout ou partie des inconvénients de l'art antérieur. A cet effet, l'invention a pour objet un ensemble de propulsion comprenant :
- une motorisation qui comporte une soufflante et un cœur de réacteur présentant une partie avant, une partie centrale ainsi qu'une partie arrière,
- une structure primaire de mât qui comporte une extrémité avant, une partie médiane et une extrémité arrière,
- un système d'attache-moteur, reliant la structure primaire et la motorisation, qui comporte plusieurs attaches présentant chacune au moins un point d'ancrage moteur sur la motorisation, tous les points d'ancrage moteur étant approximativement positionnés dans un même plan transversal.

Selon l'invention, l'ensemble de propulsion comprend une attache-moteur arrière amortissante qui comporte une première extrémité reliée à la structure primaire ainsi qu'une deuxième extrémité reliée à la partie arrière du cœur de réacteur, ladite attache-moteur arrière amortissante formant un chemin d'efforts qui comporte au moins un élément déformable de manière élastique.

Cette attache-moteur arrière amortissante permet de filtrer les efforts importants tout en assurant une reprise des efforts moins importants, comme le poids de la partie arrière du cœur de réacteur.

Selon une autre caractéristique, les première et deuxième extrémités sont positionnées selon une droite sensiblement verticale.

Selon une autre caractéristique, l'attache-moteur arrière amortissante comprend au moins un corps, au moins un axe de liaison reliant le corps et un élément parmi le cœur de réacteur et la structure primaire, positionné dans un plan longitudinal et vertical, ainsi qu' au moins une bague en élastomère intercalée entre le corps et l'axe de liaison.

Selon un mode de réalisation, le corps est une manille à trois points qui comprend au moins une plaque présentant trois orifices traversants. En complément, l'attache-moteur arrière amortissable comprend des premier, deuxième et troisième axes de liaison logés respectivement dans les premier, deuxième et troisième orifices traversants de la plaque et positionnés chacun dans un plan longitudinal vertical ; le premier axe de liaison reliant la plaque et la structure primaire, les deuxième et troisième axes de liaison reliant la plaque et le cœur de réacteur.

Selon une autre caractéristique, l'attache-moteur arrière amortissante comprend au moins une bague en élastomère intercalée entre chacun des premier, deuxième et troisième axes de liaison et le corps.

Selon un autre mode de réalisation, le corps comprend une base ainsi que des première et deuxième branches qui forment un Vé évasé en direction du cœur de réacteur et comprennent respectivement des premier et deuxième orifices traversants. En complément, l'attache-moteur arrière amortissante comprend une liaison reliant le corps et la structure primaire ainsi que des premier et deuxième axes de liaison respectivement logés dans les premier et deuxième orifices traversants du corps et positionnés chacun dans un plan longitudinal et vertical, les premier et deuxième axes de liaison reliant le corps et le cœur de réacteur.

Selon une autre configuration, les première et deuxième branches sont configurées pour obtenir un effet amortissant grâce à un design optimisé en raideur.

Selon une autre caractéristique, l'attache-moteur arrière amortissante comprend au moins une bague en élastomère intercalée entre au moins un des premier et deuxième axes de liaison et le corps.

Selon une autre caractéristique, le corps comprend une face de contact plaquée contre la structure primaire ainsi qu'un tenon cylindrique de type spigot en saillie par rapport à la face de contact. En complément, l'attache-moteur arrière amortissante comprend un logement, prévu au niveau de la structure primaire, configuré pour loger de manière ajustée le tenon cylindrique de type spigot ainsi qu'un système de maintien configuré pour maintenir le corps plaqué contre la structure primaire ; le tenon cylindrique de type spigot du corps et le logement de la structure primaire assurant essentiellement une reprise des efforts de cisaillement positionnés dans un plan approximativement horizontal, le système de maintien assurant essentiellement une reprise des efforts de traction orientés approximativement verticalement.

Selon une autre caractéristique, l'attache-moteur arrière amortissante comprend une liaison de sécurité en attente de type « waiting fail-safe », reliant le corps et le cœur de réacteur, configurée pour ne pas générer de chemin d'effort lorsque les premier et deuxième axes de liaison sont en état de fonctionner et générer un chemin d'effort additionnel uniquement en cas de défaillance d'au moins un des premier et deuxième axes de liaison.

Selon une autre caractéristique, l'attache-moteur arrière amortissante comprend au moins une bague en élastomère intercalée entre chacun des premier et deuxième axes de liaison et le corps.

Selon une autre caractéristique, chaque bague est réalisée en un matériau présentant une raideur en fonction de l'effet amortisseur souhaité.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue latérale d'un ensemble de propulsion d'aéronef (sans nacelle) illustrant un mode de réalisation de l'art antérieur,
- La figure 3 est une vue latérale d'un ensemble de propulsion d'aéronef (sans nacelle) illustrant un mode de réalisation de l'invention,
- La figure 4 est une vue en perspective d'un ensemble de propulsion d'aéronef (sans nacelle) illustrant un mode de réalisation de l'invention,
- La figure 5 est une vue latérale d'une structure primaire et d'un système d'attache moteur illustrant un mode de réalisation de l'invention,
- La figure 6 est une vue de dessus d'une structure primaire et d'un système d'attache moteur illustrant un mode de réalisation de l'invention,
- La figure 7 est une vue en perspective d'une partie d'un système d'attache moteur illustrant un mode de réalisation de l'invention,
- La figure 8 est une vue de face d'une attache-moteur arrière amortissante illustrant un mode de réalisation de l'invention,
- La figure 9 est une vue de face d'une attache-moteur arrière amortissante illustrant un autre mode de réalisation de l'invention.

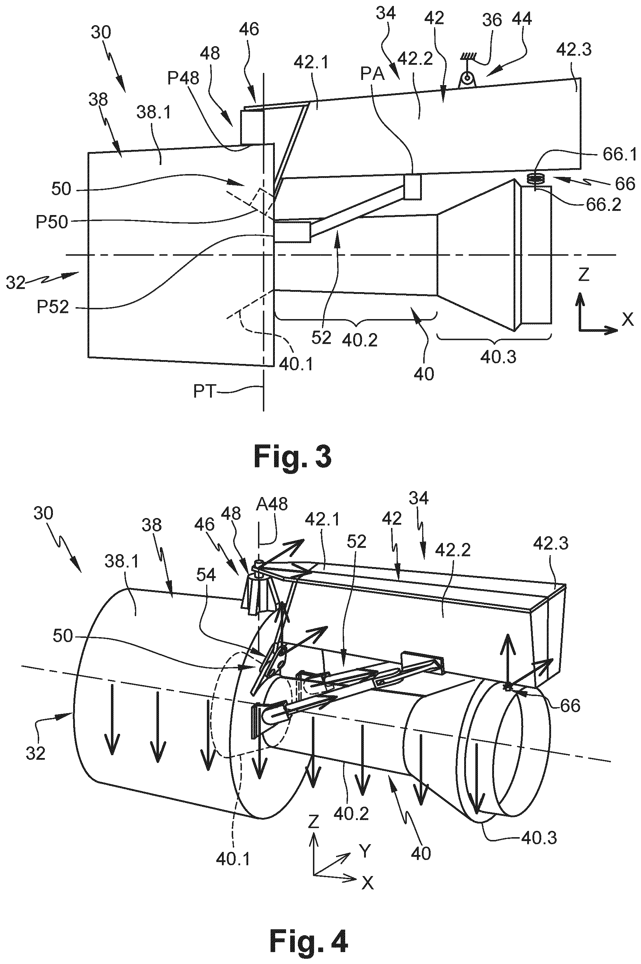

Selon un mode de réalisation visible sur les figures 3 et 4, un ensemble de propulsion 30 comprend une motorisation 32, une nacelle (non représentée) positionnée autour de la motorisation 32 ainsi qu'un mât 34 configuré pour relier l'ensemble de propulsion 30, et plus particulièrement la motorisation 32, à une voilure 36 d'un aéronef. Ce dernier comprend au moins un tel ensemble de propulsion 30.

La motorisation 32 comprend une soufflante 38 ainsi qu'un cœur de réacteur 40.

La soufflante 38 comporte un carter de soufflante 38.1. Le cœur de réacteur 40 comporte, de l'avant vers l'arrière, une partie avant 40.1 positionnée à l'intérieur de la soufflante 38, une partie centrale 40.2 ainsi qu'une partie arrière 40.3 intégrant notamment des turbines haute et basse pression et assurant en aval une jonction avec une tuyère (non-représentée). Selon une configuration, la partie centrale 40.2 présente une section transversale inférieure à celles des parties avant et arrière 40.1, 40.3.

Le mât 34 comprend une structure primaire 42, sous la forme d'un caisson, qui est reliée à la voilure 36 par un système d'attache-voilure 44 (représenté de manière simplifiée sur la figure 3 car hors champ de l'invention) et à la motorisation 32 par un système d'attache-moteur 46. Cette structure primaire 42 comprend une extrémité avant 42.1, une partie médiane 42.2 et une extrémité arrière 42.3.

Selon un mode de réalisation visible sur les figures 3 à 6, le système d'attache-moteur 46 comprend une première attache 48 reliant l'extrémité avant 42.1 de la structure primaire 42 et le carter de soufflante 38.1, une deuxième attache 50 reliant l'extrémité avant 42.1 de la structure primaire 42 et la partie avant 40.1 du cœur de réacteur 40 ainsi qu'une troisième attache 52 reliant la partie médiane 42.2 de la structure primaire 42 et la partie avant 40.1 du cœur de réacteur 40. Selon ce mode de réalisation, les première, deuxième et troisième attaches 48, 50, 52 sont reliées à la motorisation 32 en des points d'ancrage moteur P48, P50, P52 positionnés approximativement dans un même plan transversal PT.

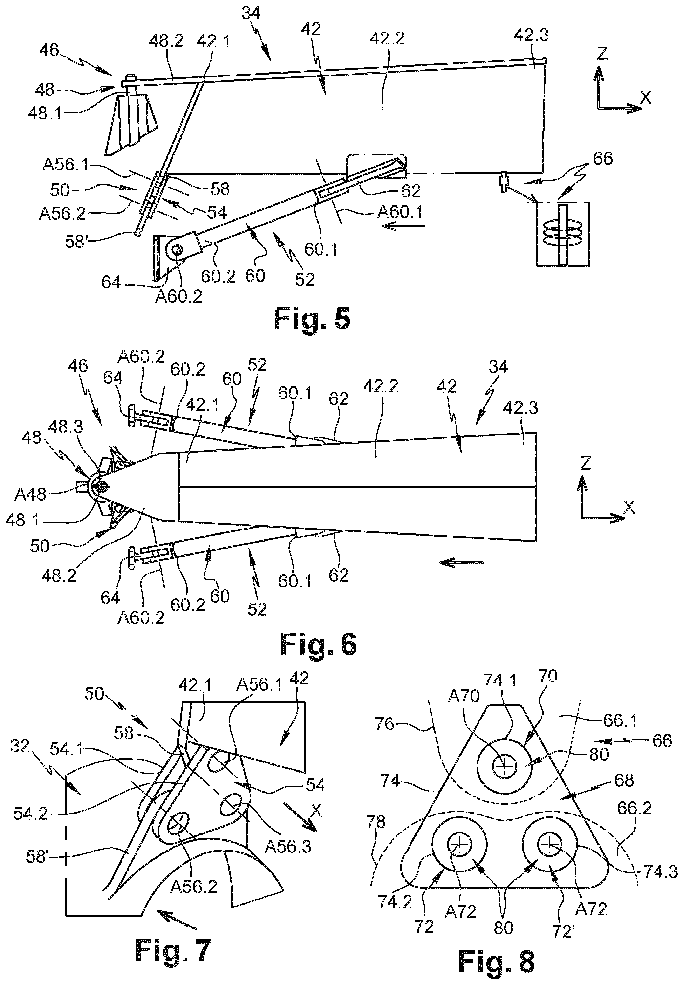

Comme illustré sur la figure 4, selon un mode de réalisation, la première attache 48 est configurée pour assurer une reprise des efforts selon la direction longitudinale X et la direction transversale et horizontale Y. Selon une configuration visible sur les figures 5 et 6, la première attache 48 comprend un premier axe de pivotement A48 vertical, un tenon cylindrique 48.1 de type spigot, solidaire du carter de soufflante 38.1, vertical qui présente un axe confondu avec le premier axe de pivotement A48 ainsi qu'une plaque 48.2 solidaire de l'extrémité avant 42.1 de la structure primaire 42, sensiblement horizontale, qui présente un orifice 48.3 configuré pour loger de manière ajustée le tenon cylindrique 48.1 de type spigot.

La deuxième attache 50 est configurée pour assurer une reprise des efforts selon les directions transversales horizontale et verticale Y et Z. Selon une configuration visible sur la figure 7, la deuxième attache 50 comprend au moins une manille à trois points 54, un premier axe de liaison A56.1 reliant la manille à trois points 54 et l'extrémité avant 42.1 de la structure primaire 42 ainsi que des deuxième et troisième axes de liaison A56.2, A56.3 reliant la manille à trois points 54 et la partie avant 40.1 du cœur de réacteur 40.

Les premier, deuxième et troisième axes de liaison A56.1, A56.2, A56.3 sont parallèles entre eux et positionnés dans des plans sensiblement verticaux.

La manille à trois points 54 comprend deux plaques 54.1, 54.2 sensiblement parallèles entre elles et faiblement espacées entre elles. Chaque plaque 54.1, 54.2 est approximativement triangulaire et présente trois orifices traversants pour loger les axes de liaison A56.1 à A56.3, positionnés au niveau des sommets de chaque plaque 54.1, 54.2. En complément, la deuxième attache 50 comprend une première patte 58 solidaire de l'extrémité avant 42.1 de la structure primaire 42, positionnée entre les deux plaques 54.1, 54.2 de la manille à trois points 54, qui présente un orifice pour loger le premier axe de liaison A56.1 ainsi qu'au moins une deuxième patte 58' solidaire de la partie avant 40.1 du cœur de réacteur 40, positionnée entre les deux plaques 54.1, 54.2 de la manille à trois points 54, qui présente deux orifices pour loger les deuxième et troisième axes de liaison A56.2, A56.3.

Les premier, deuxième et troisième axes de liaison A56.1 à A56.3 peuvent être rotulés.

Selon un agencement, chacun des premier, deuxième et troisième axes de liaison A56.1 à A56.3 forme avec un plan transversal un angle de l'ordre de 15 à 45°. En parallèle, chaque plaque 54.1, 54.2 de la manille à trois points 54 est positionnée dans un plan perpendiculaire aux premier, deuxième et troisième axes de liaison A56.1 à A56.3.

La troisième attache 52 est configurée pour assurer une reprise des efforts selon au moins une direction longitudinale X. Elle comprend deux bielles 60, positionnées de manière symétrique par rapport au plan médian vertical.

Chaque bielle 60 présente une première extrémité 60.1 reliée à la partie médiane 42.2 de la structure primaire 42 par un premier axe de liaison A60.1 ainsi qu'une deuxième extrémité 60.2 reliée à la partie avant 40.1 du cœur de réacteur 40 par un deuxième axe de liaison A60.2. Selon un agencement, chaque deuxième axe de liaison A60.2 est positionné dans un plan sensiblement horizontal. En complément, chaque premier axe de liaison A60.1 est positionné dans un plan sensiblement longitudinal et vertical. Ainsi, les premier et deuxième axes de liaison A60.1, A60.2 sont orientés selon deux directions sensiblement perpendiculaires. Néanmoins, l'orientation angulaire des axes de liaison A60.1 et A60.2 pourrait être orientée selon 2 directions sensiblement parallèles ou intermédiaires, et ce sans changement sur la portée de l'invention. Selon un mode de réalisation, ces axes de liaison A60.1 et A60.2, pourraient également être rotulés.

Chacune des première et deuxième extrémités 60.1, 60.2 de chaque bielle 60 comprend une chape.

La troisième attache 52 comprend, pour chaque bielle 60, une première patte 62 solidaire de la partie médiane 42.2 de la structure primaire 42 et reliée par le premier axe de liaison A60.1 à la chape de la première extrémité 60.1 de la bielle 60 ainsi qu'une deuxième patte 64 solidaire de la partie avant 40.1 du cœur de réacteur 40 et reliée par le deuxième axe de liaison A60.2 à la chape de la deuxième extrémité 60.2 de la bielle 60.

Les première, deuxième et troisième attaches 48, 50, 52 ne sont pas plus décrites car elles peuvent être identiques à celles de l'art antérieur.

Bien entendu, l'invention n'est pas limitée à cette configuration pour le système d'attache moteur. Quel soit le mode de réalisation, le système d'attache-moteur 46 comprend plusieurs attaches 48, 50, 52 qui présentent chacune au moins un point d'ancrage moteur P48, P50, P52 sur la motorisation 32, tous les points d'ancrage moteur P48, P50, P52 étant positionnés approximativement dans un même plan transversal PT ; au moins l'une des attaches 48, 50, 52 comprenant un point d'ancrage arrière PA sur la structure primaire 42 situé le plus à l'arrière, au niveau de la partie médiane 42.2 de la structure primaire 42.

Selon une caractéristique de l'invention, l'ensemble de propulsion 30 comprend au moins une attache-moteur arrière amortissante 66 qui présente au moins une première extrémité 66.1 reliée à la structure primaire 42 au niveau d'une zone d'ancrage décalée vers l'arrière par rapport au point d'ancrage arrière PA du système d'attache-moteur 46, proche de l'extrémité arrière 42.3 de la structure primaire 42, ainsi qu'au moins une deuxième extrémité 66.2 reliée à la partie arrière 40.3 du cœur de réacteur 40. Les première et deuxième extrémités 66.1, 66.2 sont positionnées dans un plan sensiblement vertical.

Comme illustré sur la figure 4, cette attache-moteur arrière amortissante 66 est configurée pour assurer une reprise des efforts selon les directions transversales horizontale et verticale Y, Z. Selon une configuration, l'attache-moteur arrière amortissante 66 est configurée pour assurer une reprise des efforts uniquement selon les directions transversales horizontale et verticale Y, Z. Selon une autre configuration, l'attache-moteur arrière amortissante 66 est configurée pour assurer une reprise des efforts uniquement selon la direction transversale horizontale Y.

L'attache-moteur arrière amortissante 66 comprend au moins un corps 68 relié à au moins un élément parmi le cœur de réacteur 40 et la structure primaire 42 par au moins un axe de pivotement positionné dans un plan longitudinal et vertical.

Selon un premier mode de réalisation visible sur la figure 8, l'attache-moteur arrière amortissante 66 comprend un corps 68 relié au cœur de réacteur 40 par une première liaison 70 comprenant au moins un premier axe de liaison A70 positionné dans un plan longitudinal et vertical et à la structure primaire 42 par une deuxième liaison 72 comprenant au moins un deuxième axe de liaison A72 positionné dans un plan longitudinal et vertical. Les premier et deuxième axes de liaison A70, A72 sont sensiblement parallèles entre eux.

Selon une configuration, le corps 68 est une manille à trois points qui comprend au moins une plaque 74 approximativement triangulaire présentant des premier, deuxième et troisième orifices traversants 74.1, 74.2, 74.3 positionnés au niveau des trois sommets de la forme triangulaire. Selon une conception, la manille à trois points comprend deux plaques 74 identiques sensiblement parallèles entre elles et faiblement espacées entre elles. L'attache-moteur arrière amortissable 66 comprend des premier, deuxième et troisième axes de liaison A70, A72, A72' logés respectivement dans les premier, deuxième et troisième orifices traversants 74.1, 74.2, 74.3 qui comporte chacun un corps cylindrique, au moins une première patte 76, solidaire de la structure primaire 42, qui présente un orifice pour loger le premier axe de liaison A70 ainsi qu'au moins une deuxième patte 78, solidaire du cœur de réacteur 40, qui présente deux orifices pour loger les deuxième et troisième axes de liaison A72, A72'. Ainsi, le premier axe de liaison A70 relie la plaque 74 et la première patte 76. Les deuxième et troisième axes de liaison A72, A72' relient la plaque 74 et la deuxième patte 78.

Les premier, deuxième, troisième axes de liaison A70, A72, A72' sont sensiblement parallèles entre eux et positionnés chacun dans un plan longitudinal et vertical.

Selon ce premier mode de réalisation, l'attache-moteur arrière amortissante 66 est configurée pour assurer une reprise des efforts selon les directions transversales horizontale et verticale Y, Z.

Pour obtenir un effet amortisseur, l'attache-moteur arrière amortissante 66 comprend au moins une bague 80 en élastomère intercalée entre un axe de liaison parmi les premier, deuxième et troisième axes de liaison A70, A72, A72' et le corps 68. Selon un agencement, l'attache-moteur arrière amortissante 66 comprend au moins une bague 80 en élastomère intercalée entre chacun des premier, deuxième et troisième axes de liaison A70, A72, A72' et le corps 68.

Chaque bague 80 présente une raideur en fonction de l'effet amortisseur souhaité. Pour donner un ordre de grandeur, une bague 80 présente une épaisseur (distance séparant la paroi intérieure en contact avec un axe de liaison et la paroi extérieure en contact avec le corps 68) comprise entre 10 et 40 mm.

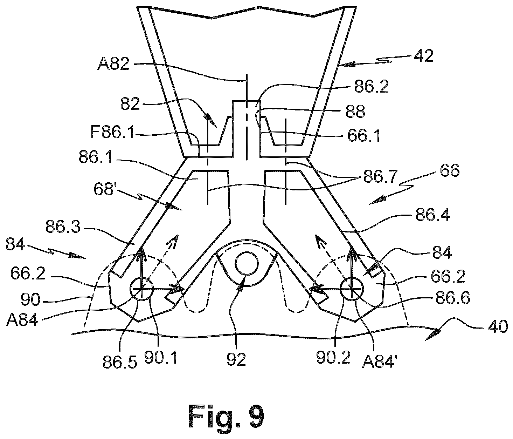

Selon un deuxième mode de réalisation visible sur la figure 9, l'attache-moteur arrière amortissante 66 comprend un corps 68' relié à la structure primaire 42 par une première liaison 82 et au cœur de réacteur 40 par une deuxième liaison 84 comprenant au moins des premier et deuxième axes de liaison A84, A84' approximativement positionnés chacun dans un plan longitudinal et vertical. Les premier et deuxième axes de liaison A84, A84' sont sensiblement parallèles entre eux.

Selon une configuration, le corps 68' comprend une base 86.1 qui présente une face de contact F86.1 maintenue plaquée contre la structure primaire 42, un tenon cylindrique 86.2 de type spigot en saillie par rapport à la face de contact F86.1 ainsi que des première et deuxième branches 86.3, 86.4 qui forment un Vé évasé en direction du cœur de réacteur 40 et comprennent respectivement des premier et deuxième orifices traversants 86.5, 86.6 pour loger les premier et deuxième axes de liaison A84, A84'. En complément, l'attache-moteur arrière amortissante 66 comprend un logement 88, prévu au niveau de la structure primaire 42, configuré pour loger de manière ajustée le tenon cylindrique 86.2 de type spigot ainsi qu'au moins une patte 90, solidaire du cœur de réacteur 40, qui présente des premier et deuxième trous traversants 90.1, 90.2 pour respectivement loger les premier et deuxième axes de liaison A84, A84'. Ainsi, ces derniers relient le corps 68' et le cœur de réacteur 40. Selon un mode de réalisation, les première et deuxième branches 86.3, 86.4 sont configurées pour obtenir un effet amortissant grâce à un design optimisé en raideur selon les trois directions X, Y et Z. En complément ou en variante, l'attache-moteur arrière amortissante 66 comprend au moins une bague en élastomère intercalée entre un axe de liaison parmi les premier et deuxième axes de liaison A84, A84' et le corps 68'. Selon un agencement, l'attache-moteur arrière amortissante 66 comprend au moins une bague 80 en élastomère intercalée entre chacun des premier et deuxième axes de liaison A84, A84' et le corps 68'.

Selon cette configuration, le tenon cylindrique 86.2 de type spigot du corps 68' et le logement 88 de la structure primaire 42 assurent essentiellement une reprise des efforts de cisaillement (positionnés dans un plan approximativement horizontal) entre le corps 68' et la structure primaire 42. En complément, l'attache-moteur arrière amortissante 66 comprend un système de maintien 86.7 (comme des boulons insérés dans des manchons par exemple) configuré pour maintenir la base 86.1 du corps 68' plaquée contre la structure primaire 42 et assurer essentiellement une reprise des efforts de traction orientés approximativement verticalement. Cet agencement permet de dissocier la reprise des efforts de cisaillement positionnés dans un plan horizontal et celle des efforts de traction, orientés verticalement. En variante, la première liaison 82 ne comprend que des éléments de liaison (comme des boulons) verticaux reprenant indifféremment les efforts de cisaillement et de traction. Selon un agencement, l'attache-moteur arrière amortissante 66 comprend une liaison de sécurité en attente 92 de type « waiting fail-safe » en anglais, reliant le corps 68' et le cœur de réacteur 40, configurée pour ne pas générer de chemin d'effort lorsque les premier et deuxième axes de liaison A84, A84' sont en état de fonctionner et générer un chemin d'effort additionnel uniquement en cas de défaillance d'au moins un des premier et deuxième axes de liaison A84, A84'.

Selon ce deuxième mode de réalisation, l'attache-moteur arrière amortissante 66 est configurée pour assurer une reprise des efforts selon les directions longitudinale, transversales horizontale et verticale X, Y, Z et par combinaison du moment de torsion Mx. Quel que soit le mode de réalisation, l'ensemble de propulsion comprend une attache-moteur amortissante 66 qui présente une première extrémité 66.1 reliée à la structure primaire 42 au niveau d'une zone d'ancrage décalée vers l'arrière par rapport au point d'ancrage arrière PA du système d'attache-moteur 46 ainsi qu'une deuxième extrémité 66.2 reliée à la partie arrière 40.3 du cœur de réacteur. Cette attache-moteur arrière amortissante 66 forme un chemin d'efforts qui comporte au moins un élément déformable de manière élastique pour absorber par déformation une partie des efforts transitant entre la partie arrière 40.3 du cœur de réacteur 40 et la structure primaire 42. Cet élément déformable de manière élastique peut être une bague, un manchon ou tout autre élément intercalaire.

Cette attache-moteur arrière amortissante 66 génère un chemin d'efforts filtrant qui ne draine que les forces inertielles provenant uniquement de la partie arrière 40.3 du cœur de réacteur 40 dans laquelle sont notamment positionnées des turbines haute et basse pression. Ainsi, l'attache-moteur arrière amortissante 66 permet de filtrer les efforts importants tout en assurant une reprise des efforts moins importants comme le poids de la partie arrière 40.3 du cœur de réacteur 40.

## Revendications

1. Ensemble de propulsion (30) comprenant :
- une motorisation (32) qui comporte une soufflante (38) et un cœur de réacteur (40) présentant une partie avant (40.1), une partie centrale (40.2) ainsi qu'une partie arrière (40.3),
- une structure primaire (42) de mât (34) qui comporte une extrémité avant (42.1), une partie médiane (42.2) et une extrémité arrière (42.3),
- un système d'attache-moteur (46), reliant la structure primaire (42) et la motorisation (32), qui comporte plusieurs attaches (48, 50, 52) présentant chacune au moins un point d'ancrage moteur (P48, P50, P52) sur la motorisation (32), tous les points d'ancrage moteur (P48, P50, P52) étant approximativement positionnés dans un même plan transversal (PT),
**caractérisé en ce que** l'ensemble de propulsion (30) comprend une attache-moteur arrière amortissante (66) qui comporte une première extrémité (66.1) reliée à la structure primaire (42) ainsi qu'une deuxième extrémité (66.2) reliée à la partie arrière (40.3) du cœur de réacteur (40) et **en ce que** ladite attache-moteur arrière amortissante (66) forme un chemin d'efforts qui comporte au moins un élément déformable de manière élastique,
et **en ce que** l'attache-moteur arrière amortissante (66) comprend au moins un corps (68, 68'), au moins un axe de liaison reliant le corps (68, 68') et un élément parmi le cœur de réacteur (40) et la structure primaire (42), positionné dans un plan longitudinal et vertical, ainsi qu' au moins une bague (80) en élastomère intercalée entre le corps (68, 68') et l'axe de liaison.

2. Ensemble de propulsion selon la revendication précédente, **caractérisé en ce que** les première et deuxième extrémités (66.1, 66.2) sont positionnées selon une droite sensiblement verticale.

3. Ensemble de propulsion selon l'une des revendications 1 à 2, **caractérisé en ce que** le corps (68) est une manille à trois points qui comprend au moins une plaque (74) présentant trois orifices traversants (74.1, 74.2, 74.3) et **en ce que** l'attache-moteur arrière amortissable (66) comprend des premier, deuxième et troisième axes de liaison (A70, A72, A72') logés respectivement dans les premier, deuxième et troisième orifices traversants (74.1, 74.2, 74.3) de la plaque (74) et positionnés chacun dans un plan longitudinal vertical ; le premier axe de liaison reliant la plaque (74) et la structure primaire (42), les deuxième et troisième axes de liaison (A72, A72') reliant la plaque (74) et le cœur de réacteur (40).

4. Ensemble de propulsion selon la revendication précédente, **caractérisé en ce que** l'attache-moteur arrière amortissante (66) comprend au moins une bague (80) en élastomère intercalée entre chacun des premier, deuxième et troisième axes de liaison (A70, A72, A72') et le corps (68).

5. Ensemble de propulsion selon l'une des revendications 1 à 2, **caractérisé en ce que** le corps (68') comprend une base (86.1) ainsi que des première et deuxième branches (86.3, 86.4) qui forment un Vé évasé en direction du cœur de réacteur (40) et comprennent respectivement des premier et deuxième orifices traversants (86.5, 86.6) et ce que l'attache moteur arrière amortissante (66) comprend une liaison (82) reliant le corps (68') et la structure primaire (42) ainsi que des premier et deuxième axes de liaison (A84, A84') respectivement logés dans les premier et deuxième orifices traversants (86.5, 86.6) du corps (68') et positionnés chacun dans un plan longitudinal et vertical, les premier et deuxième axes de liaison (A84, A84') reliant le corps (68') et le cœur de réacteur (40).

6. Ensemble de propulsion selon la revendication précédente, **caractérisé en ce que** les première et deuxième branches (86.3, 86.4) sont configurées pour obtenir un effet amortissant grâce à un design optimisé en raideur.

7. Ensemble de propulsion selon l'une des revendications 5 à 6, **caractérisé en ce que** l'attache-moteur arrière amortissante (66) comprend au moins une bague en élastomère intercalée entre au moins un des premier et deuxième axes de liaison (A84, A84') et le corps (68').

8. Ensemble de propulsion selon l'une des revendications 5 à 7, **caractérisé en ce que** le corps (68') comprend une face de contact (F86.1) plaquée contre la structure primaire (42) ainsi qu'un tenon cylindrique (86.2) de type spigot en saillie par rapport à la face de contact (F86.1) et **en ce que** l'attache-moteur arrière amortissante (66) comprend un logement (88), prévu au niveau de la structure primaire (42), configuré pour loger de manière ajustée le tenon cylindrique (86.2) de type spigot ainsi qu'un système de maintien (86.7) configuré pour maintenir le corps (68') plaqué contre la structure primaire (42) ; le tenon cylindrique (86.2) de type spigot du corps (68') et le logement (88) de la structure primaire (42) assurant essentiellement une reprise des efforts de cisaillement positionnés dans un plan approximativement horizontal, le système de maintien (86.7) assurant essentiellement une reprise des efforts de traction orientés approximativement verticalement.

9. Ensemble de propulsion selon l'une des revendications 5 à 8, **caractérisé en ce que** l'attache-moteur arrière amortissante (66) comprend une liaison de sécurité en attente (92) de type « waiting fail-safe », reliant le corps (68') et le cœur de réacteur (40), configurée pour ne pas générer de chemin d'effort lorsque les premier et deuxième axes de liaison (A84, A84') sont en état de fonctionner et générer un chemin d'effort en cas de défaillance d'au moins un des premier et deuxième axes de liaison (A84, A84').

10. Ensemble de propulsion selon l'une des revendications 5 à 9, **caractérisé en ce que** l'attache-moteur arrière amortissante (66) comprend au moins une bague (80) en élastomère intercalée entre chacun des premier et deuxième axes de liaison (A84, A84') et le corps (68').

11. Ensemble de propulsion selon l'une des revendications précédentes, **caractérisé en ce que** chaque bague (80) est réalisée en un matériau présentant une raideur en fonction de l'effet amortisseur souhaité.

12. Aéronef comprenant au moins un ensemble de propulsion selon l'une des revendications précédentes.
